**Europäisches Patentamt**

**European Patent Office**

**Office européen des brevets**

(19)

(11) Veröffentlichungsnummer: **0 138 807**
**B1**

# (12) EUROPÄISCHE PATENTSCHRIFT

(45) Veröffentlichungstag der Patentschrift:
**12.08.87**

(21) Anmeldenummer: **83901593.0**

(22) Anmeldetag: **11.05.83**

(86) Internationale Anmeldenummer:
**PCT/EP 83/00125**

(87) Internationale Veröffentlichungsnummer:
**WO 84/01136 (29.03.84 Gazette 84/09)**

(51) Int. Cl.⁴: **B 62 D 55/12**, B 60 K 17/14

(54) **ANTRIEBSVORRICHTUNG.**

(30) Priorität: **24.09.82 DE 3235378**

(43) Veröffentlichungstag der Anmeldung:
**02.05.85 Patentblatt 85/18**

(45) Bekanntmachung des Hinweises auf die Patenterteilung:
**12.08.87 Patentblatt 87/33**

(84) Benannte Vertragsstaaten:
**DE FR GB**

(56) Entgegenhaltungen:
**US-A-3 439 766**
**US-A-4 207 804**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **MANN, Egon, Alemannenweg 11, D-7990 Friedrichshafen (DE)**
Erfinder: **EYMÜLLER, Helmut, Nussbaumweg 5, D-7990 Friedrichshafen (DE)**

(74) Vertreter: **Raue, Reimund, Zahnradfabrik Friedrichshafen AG Löwentaler Strasse 100 Postfach 2520, D-7990 Friedrichshafen 1 (DE)**

## Beschreibung

Die Erfindung bezieht sich auf eine Antriebsvorrichtung, insbesondere zur Verwendung als Fahr- oder Servomotor in einem Arbeitsfahrzeug, mit einem Hydromotor, mindestens einem nachgeschalteten Planetentrieb und einem Hohlrad für die Drehmomentabgabe und Montage eines getriebenen Antriebsrades, mit einem Nabenträger, der den Hydromotor in axialer Richtung übergreift, als Stützglied für einen abtriebsseitigen Planetentrieb dient und eine Bremse umschließt.

Aus unserer DE-A-2 831 458 ist ein Radantrieb mit einem Hydromotor, nachgeschaltetem Planetengetriebe und einem Hohlrad für die Drehmomentabgabe und Montage eines getriebenen Antriebsrads bekannt. Letzteres muß sehr stark abgekröpft sein, damit es seinerseits Drehmoment in axialer Richtung des Radantriebs etwa mittig abgeben kann. Dieser Umstand bedingt einen aufwendigen Aufbau des getriebenen Antriebsrads. Der bekannte Radantrieb besteht hinsichtlich der Lagerung von Hydromotor und Planetengetriebe aus einer Vielzahl von Einzelteilen. Hierdurch ist die Herstellung des bekannten Antriebs sehr aufwendig, Servicearbeiten werden erschwert bzw. sind ohne Ausbau des bekannten Antriebs überhaupt nicht durchführbar.

Aus der US-A-4 271 725 ist eine Motoreinheit bekannt, die ebenfalls einen Hydromotor und ein nachgeschaltetes Planetengetriebe umfaßt. Bei der bekannten Vorrichtung ist die Längsachse des Hydromotors gegenüber der Längsachse des nachgeschalteten Getriebes abgeknickt, weil der Hydromotor durch diese Maßnahme an dem dem Hydromotor zugeordneten Steuerdeckel vorbei zumindest teilweise Servicearbeiten zugänglich ist. Ein Hohlrad für die Drehmomentabgabe und Montage eines getriebenen Antriebsrads ist zwar so gestaltet, daß ein in einem aufwendigen Verfahren abgekröpft hergestelltes Antriebsrad nicht mehr notwendig ist, die zweiteilige Ausführung des Hohlrads erhöht aber dessen Fertigungsaufwand. Die Unterbringung des Hydromotors führt dazu, daß seine Betriebsgeräusche ungehindert nach außen dringen können. Sein Aufbau als Konstantmotor läßt keine Steuerung in dem bekannten Antrieb zu.

Es sind jeweils separate Lager für die Getrieberäder notwendig, aus diesem Grund und wegen der abgeknickten Achse des Hydromotors gegenüber der Antriebslängsachse benötigt der bekannte Antrieb relativ viel Einbauraum.

Aus der US-A-3 439 766 ist eine weitere Motoreinheit bekannt, die einen Hydromotor und ein nachgeschaltetes Planetengetriebe enthält. Bei dieser Einheit ist ein besonderer Planetenträger zur Abstützung der Planeten erforderlich. Der Nabenträger dient dabei nur zur Momentenabstützung. Der Hydromotor hat kein eigenes Gehäuse, das die im Hydromotor entstehenden Geräusche nach außen abschirmen würde.

Der Erfindung liegt die Aufgabe zugrunde, eine Antriebsvorrichtung, insbesondere zur Verwendung als Fahr- oder Servomotor in einem Arbeitsfahrzeug zu schaffen, die eine kompakte Bauweise hat, servicefreundlich ist, die Montage eines einfachen Antriebsrads, z. B. eines möglichst einfach aufgebauten Turasrads, erlaubt und möglichst geräuschgedämmt aufgebaut ist. Die Antriebsvorrichtung soll möglichst geringe Außenabmessungen aufweisen, so daß sie z. B. bei Anwendung als Fahrmotor seitlich nicht über die Breite einer Gleiskette eines Raupenbaggers hervorragt.

Die Aufgabe wird durch das im Kennzeichen des Anspruchs 1 aufgeführte Merkmal gelöst.

Durch die Erfindung kann der Auftriebsmotor sehr kompakt und in seiner axialen Länge kurz aufgebaut werden.

Nach einer Ausbildung der Erfindung ist zwischen dem Hohlrad und dem Nabenträger eine Vollrollenlagerung vorgesehen. Hierdurch sind erhebliche Kosteneinsparungen bei der Herstellung sowie höhere Belastung des Hohlrads möglich.

Nach einer anderen Ausbildung der Erfindung ist die vom Hydromotor zum Planetentrieb führende Welle koaxial zum Hydromotor angeordnet, hierdurch ist es möglich, eine einfache Kopplung der Hydromotorwelle mit der Getriebewelle zu erreichen, weil beide als Steckwellen nur ineinandergesteckt zu werden brauchen. Dies vereinfacht die Montage bei der Herstellung und erleichtert später eventuell notwendige Servicearbeiten, da der Hydromotor als Einheit zum Zweck der Demontage nur von der Getriebewelle heruntergezogen, zum Zweck der Montage nur ein- bzw. aufgeschoben zu werden braucht.

Nach einer weiteren Ausbildung der Erfindung ist der Nabenträger einstückig ausgeführt. Im Gegensatz zum Stand der Technik, bei dem entsprechende Bauteile mehrteilig aufgebaut sind, ergeben sich bei der Erfindung eine wesentliche Vereinfachung hinsichtlich der Montage bei der Herstellung und eine gute, geräuschmäßige Abschirmung des Hydromotors nach außen.

Eine weitere Ausbildung der Erfindung sieht vor, daß der Hydromotor vom Nabenträger, dem Rahmen zur Montage des Antriebsmotors sowie dem Steuerdeckel des Hydromotors umschlossen ist. Auch diese Maßnahme dient der geräuschmäßigen Abschirmung des Hydromotors nach außen, besonders wenn der Antriebsmotor in die betreffende Arbeitsmaschine oder das entsprechende Arbeitsfahrzeug eingebaut ist, weil der Rahmen die noch verbleibende Lücke um den Hydromotor schließt.

Nach einer Ausbildung der Erfindung ist die Bremse zwischen dem Hydromotor und dem nachfolgenden, mechanischen Getriebe angeordnet. Die Anordnung der Bremse an dieser Stelle führt dazu, daß die Bremse wirksamer eingesetzt werden kann, als dies am Ausgang der Antriebsvorrichtung möglich wäre.

Gemäß einer anderen Ausbildung der Erfindung ist der Durchmesser bzw. die entsprechende Außenkontur des Steuerdeckels kleiner als der Zentrierdurchmesser der Antriebsvorrichtung. Hierdurch ist es erst möglich, die Antriebsvorrichtung komplett, also mit montiertem Steuerdeckel, als Ganzes einzubauen. Die Antriebsvorrichtung kann also als eine Einheit aus- und eingebaut werden.

Eine weitere Ausbildung der Erfindung sieht vor, daß der Hydromotor und die Getriebemechanik (Planetengetriebe) dem gleichen Ölhaushalt angehören. Ein Ölwechsel für das mechanische Getriebe erübrigt sich dadurch.

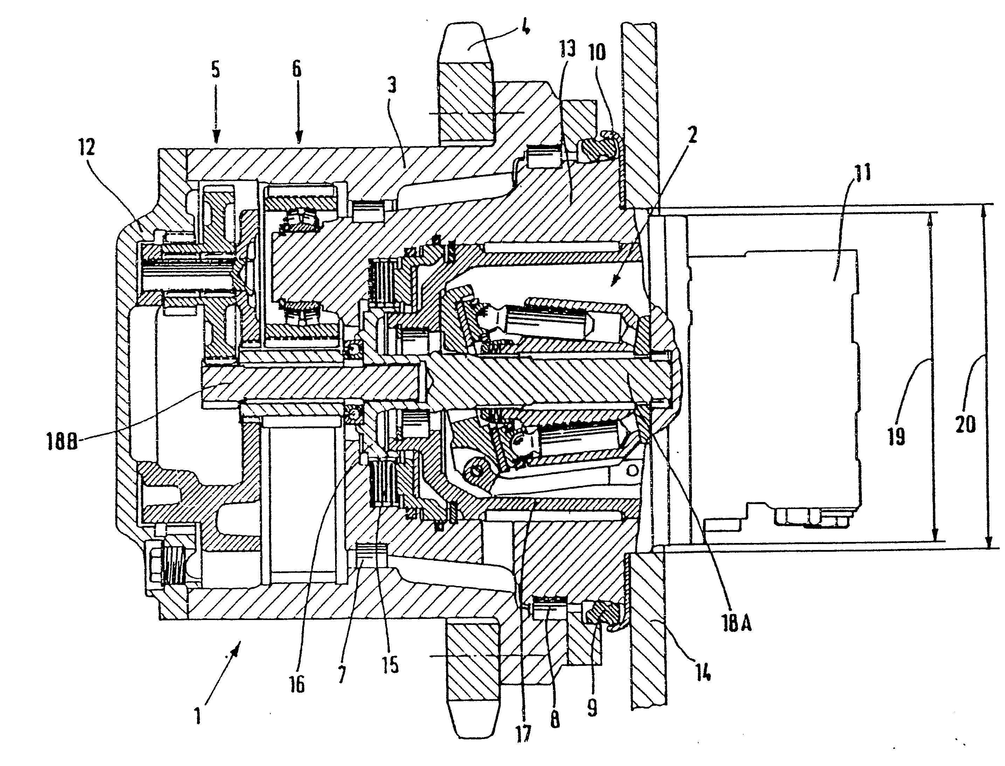

Weitere vorteilhafte Ausgestaltungen der Erfindung gehen aus der nachfolgenden Beschreibung und der Zeichnung hervor.

Die Erfindung wird anhand einer Zeichnung an einem Ausführungsbeispiel erläutert. Die Zeichnung zeigt einen Schnitt durch die erfindungsgemäße Antriebsvorrichtung.

Die Antriebsvorrichtung 1 besteht im wesentlichen aus einem Hydromotor 2, diesem nachgeschalteten Planetentrieben 5, 6 und einem Hohlrad 3 zur Anbringung eines getriebenen Antriebsrads, z. B. eines Turasrads 4 zum Antrieb einer Gleiskette. Bei dieser Befestigungsart kann das Turasrad eben ausgeführt sein, es braucht keine Abkröpfung zu haben.

Das Hohlrad 3 ist über zwei Lager 7, 8 auf einem Nabenträger 13 gelagert. Das getriebene Antriebsrad, beim Ausführungsbeispiel also das Turasrad 4, ist an einer Stelle montiert, die zwischen den beiden Lagern 7, 8 liegt. Letztere können als Vollrollenlager ausgeführt sein.

Der Nabenträger 13 ist einstückig ausgeführt und dient neben der Lagerung des Hohlrads 3 auch der Lagerung des einen Planetentriebs 6. Ferner trägt der Nabenträger 13 einen Teil einer Bremse 15, die beim Ausführungsbeispiel als Sicherheitslamellenbremse aufgebaut ist bzw. angewandt wird.

Ein Getriebedeckel 12 ist am Hohlrad 3 angebracht und läuft daher mit um. Bei abgenommenem Getriebedeckel 12 liegt die Getriebemechanik frei. Getriebeteile können leicht inspiziert, gewartet und ausgetauscht werden.

Eine Welle 18 A des Hydromotors 2 und eine Welle 18 B des Planetengetriebes bilden zusammen die Hauptwelle der Antriebsvorrichtung. Die beiden Wellen 18 A, 18 B werden bei Montage der Antriebsvorrichtung lediglich zusammengesteckt. Dies schafft für Servicearbeiten die Möglichkeit, jederzeit den als Einheit aufgebauten Hydromotor 2 aus der Antriebsvorrichtung herauszuziehen. Die Bremse 15 ist dann zugänglich und kann gewartet werden.

Weil ferner ein Steuerdeckel 11 für den Hydromotor 2 mit diesem eine Baueinheit bildet, können sogar Steuerdeckel 11 und Hydromotor 2 gemeinsam als Einheit aus der Antriebsvorrichtung herausgezogen bzw. in diese eingesetzt werden.

Der Hydromotor 2 weist ein separates Gehäuse 17 auf, das seine geräuschmäßige Abschirmung nach außen sicherstellt. Eine zusätzliche Geräuschdämmung ergibt sich dadurch, daß der Hydromotor 2 mit seinem Gehäuse 17 insgesamt durch weitere Bauteile umschlossen ist, nämlich den Nabenträger 13, den Rahmen 14, an dem die Antriebsvorrichtung 1 befestigt wird, und den Steuerdeckel 11. Zwischen dem Gehäuse 17 des Hydromotors 2 und dem Nabenträger 13 bzw. dem Rahmen 14 bzw. dem Steuerdeckel 11 können geräuschdämmende Mittel zwischengeschaltet sein.

Eine Dichtung 9 kann leicht dadurch gewartet werden, daß ein Abdeckblech 10 bei ausgebauter Antriebsvorrichtung 1 abgenommen wird. Die Dichtung 9 liegt dann frei und kann z. B. erneuert werden.

Zu der Bremse 15 gehört auch ein Innenträger 16, z. B. ein Innenlamellenträger einer Lamellenbremse. Der Innenträger 16 übergreift einen Teil des Gehäuses 17 des Hydromotors 2, diese Maßnahme kommt dem Bestreben entgegen, die Antriebsvorrichtung möglichst kompakt und axial kurz aufzubauen.

Getriebemechanik, also vor allem die Planetentriebe 5, 6 und der Hydromotor 2, haben einen gemeinsamen Ölhaushalt. Ein Ölwechsel des mechanischen Getriebes erübrigt sich also.

Weil die Antriebsvorrichtung axial relativ kurz gebaut ist, ragt sie bei Anwendung auf ein Gleiskettenfahrzeug, z. B. einen Raupenbagger, als Fahrmotor nicht über die Kettenbreite hinaus und ist daher gut geschützt.

Die Antriebsvorrichtung 1 kann als eine komplette Einheit ein- und ausgebaut werden, weil ein Durchmesser 19 des Steuerdeckels 11 kleiner als ein Zentrierdurchmesser 20 der Antriebsvorrichtung ist.

**Bezugszeichen**

1 Antriebsvorrichtung
2 Hydromotor
3 Hohlrad
4 Turasrad
5 Planetentrieb
6 Planetentrieb
7 Lager
8 Lager
9 Dichtung
10 Abdeckblech
11 Steuerdeckel
12 Getriebedeckel
13 Nabenträger
14 Rahmen
15 Bremse
16 Innenträger
17 Gehäuse
18 A Welle

18 B Welle
19 Durchmesser
20 Zentrierdurchmesser

## Patentansprüche

1. Antriebsvorrichtung, insbesondere zur Verwendung als Fahr- oder Servomotor in einem Arbeitsfahrzeug, mit einem Hydromotor, mindestens einem nachgeschalteten Planetentrieb und einem Hohlrad für die Drehmomentabgabe und Montage eines getriebenen Antriebsrades, mit einem Nabenträger, der den Hydromotor in axialer Richtung übergreift, als Stützglied für einen abtriebsseitigen Planetentrieb dient und eine Bremse umschließt, dadurch gekennzeichnet, daß das Gehäuse (17) des Hydromotors (2) in einen Innenträger (16) der Bremse (15) hineinragt.

2. Antriebsvorrichtung nach Anspruch 1, dadurch gekennzeichnet, daß zwischen dem Hohlrad (3) und dem Nabenträger (13) eine Vollrollenlagerung vorgesehen ist, deren Rollen direkt auf einer Außenumfangsfläche des Hohlrades (3) und in einer Innenumfangsfläche des Nabenträgers (13) laufen.

3. Antriebsvorrichtung nach einem der Ansprüche 1 oder 2, dadurch gekennzeichnet, daß die vom Hydromotor (2) zum Planetentrieb (5, 6) führende Welle (18 A, 18 B) koaxial zum Hydromotor (2) angeordnet ist.

4. Antriebsvorrichtung nach einem der Ansprüche 1 - 3, dadurch gekennzeichnet, daß das Hohlrad (3) einstückig ist.

5. Antriebsvorrichtung nach einem der Ansprüche 1 - 4, dadurch gekennzeichnet, daß der Nabenträger (13) einstückig ist.

6. Antriebsvorrichtung nach einem der Ansprüche 1 - 5, dadurch gekennzeichnet, daß der Hydromotor (2) vom Nabenträger (13) dem Rahmen (14) zur Montage des Antriebsmotors sowie dem Steuerdeckel (11) des Hydromotors umschlossen ist.

7. Antriebsvorrichtung nach einem der Ansprüche 1 - 6, dadurch gekennzeichnet, daß die Bremse (15) zwischen dem Hydromotor (2) und dem nachfolgenden mechanischen Getriebe (Planetentrieb 5) angeordnet ist.

8. Antriebsvorrichtung nach einem der Ansprüche 1 - 7, dadurch gekennzeichnet, daß der Durchmesser (19) des Steuerdeckels kleiner als der Zentrierdurchmesser (20) der Antriebsvorrichtung ist.

9. Antriebsvorrichtung nach einem der Ansprüche 1 - 8, dadurch gekennzeichnet, daß der Hydromotor (2) und die Getriebemechanik (Planetentriebe 5, 6) dem gleichen Ölhaushalt angehören.

## Claims

1. A driving mechanism, particularly suitable as a traction motor or as a servo motor in an industrial vehicle, with a hydromotor, at least with one rear-mounted planetary gear and a ring gear for torque transmission and for mounting a driving wheel, with a hub support, encompassing the hydromotor in axial direction, serving as supporting element for a planetary gear on the output end and encompassing a brake, characterized in that the housing (17) of the hydromotor (2) extends into an internal disc carrier (16) of the brake (15).

2. A driving mechanism according to claim 1, characterized in that a solid roller bearing is arranged between ring gear (3) and hub support (13), the rollers of which run directly on one outer circumference of the ring gear (3) and within one internal circumference of the hub support (13).

3. A driving mechanism according to one of the claims 1 or 2, characterized in that the shaft (18A, 18B) leading from hydromotor (2) to planetary gear (5, 6) is arranged coaxially to hydromotor (2).

4. A driving mechanism according to one of the claims 1 to 3, characterized in that the ring gear (3) is a single part.

5. A driving mechanism according to one of the claims 1 to 4, characterized in that the hub support (13) is a single part.

6. A driving mechanism according to one of the claims 1 to 5, characterized in that the hydromotor (2) is encompassed by the hub support (13), by the structure (14) for mounting the driving motor, and the control over (11) of the hydromotor.

7. A driving mechanism according to one of the claims 1 to 6, characterized in that the brake (15) is arranged between the hydromotor (2) and the rear-mounted mechanical transmission (planetary gear 5).

8. A driving mechanism according to one of the claims 1 to 7, characterized in that the diameter (19) of the control cover is smaller than the centring diameter (20) of the driving mechanism.

9. A driving mechanism according to one of the claims 1 to 8, characterized in that the hydromotor (2) and the transmission mechanics (planetary gears 5, 6) are subject to the same oil circuit.

## Revendications

1. Dispositif d'entraînement, utilisable notamment comme moteur de traction ou comme servomoteur dans un véhicule de travail, comportant un moteur hydraulique, au moins une transmission planétaire en aval de ce moteur, et une roue à denture intérieure pour la transmission du couple et le montage d'une roue entraînée, et comportant également un porte-moyeu qui s'étend axialement par-dessus le moteur hydraulique, sert d'élément de support d'une transmission planétaire de sortie et entoure un frein, caractérisé en ce que le boîtier (17) du moteur hydraulique (2) s'étend jusqu'à l'intérieur d'un support intérieur (16) du frein (15).

2. Dispositif selon la revendication 1, caractérisé en ce qu'il est prévu, entre la roue à denture intérieure (3) et le porte-moyeu (13), un roulement à rouleaux intégral, dont les rouleaux roulent directement sur une surface périphérique extérieure de la roue à denture intérieure (3) et sur une surface périphérique intérieure du porte-moyeu (13).

3. Dispositif selon l'une des revendications 1 ou 2, caractérisé en ce que l'arbre (18A, 18B) reliant le moteur hydraulique (2) à la transmission planétaire (5, 6) est disposé coaxialement à ce moteur (2).

4. Dispositif selon l'une des revendications 1 à 3, caractérisé en ce que la roue à denture intérieure (3) est d'une pièce.

5. Dispositif selon l'une des revendications 1 à 4, caractérisé en ce que le porte-moyeu (13) est d'une pièce.

6. Dispositif selon l'une des revendications 1 à 5, caractérisé en ce que le moteur hydraulique (2) est entouré par le porte-moyeu (13), le bâti (14) de montage du moteur d'entraînement et le chapeau de commande (11) du moteur hydraulique.

7. Dispositif selon l'une des revendications 1 à 6, caractérisé en ce que le frein (15) est disposé entre le moteur hydraulique (2) et la transmission mécanique suivante (transmission planétaire 5).

8. Dispositif selon l'une des revendications 1 à 7, caractérisé en ce que le diamétre (19) du chapeau de commande est plus petit que le diamètre de centrage (20) du dispositif d'entraînement.

9. Dispositif selon l'une des revendications 1 à 8, caractérisé en ce que le moteur hydraulique (2) et le mécanisme de transmission (transmissions planétaires (5, 6) appartiennent à un même circuit d'huile.